(19) Europäisches Patentamt

European Patent Office

Office européen des brevets

(11) **EP 4 757 155 A1**

(12) **EUROPEAN PATENT APPLICATION**

(43) Date of publication:
**10.06.2026 Bulletin 2026/24**

(21) Application number: **25214434.0**

(22) Date of filing: **07.11.2025**

(51) International Patent Classification (IPC):
*H02M 1/32* $^{(2007.01)}$          *H02M 7/5387* $^{(2007.01)}$

(52) Cooperative Patent Classification (CPC):
**H02M 1/322; H02M 1/327; H02M 7/5387**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **06.12.2024  US 202418972266**

(71) Applicant: **BorgWarner Luxembourg Automotive
Systems S.A.
4940 Bascharage (LU)**

(72) Inventor: **WACHTER, Georges Leopold Camille
Luxembourg (LU)**

(74) Representative: **Office Freylinger
P.O. Box 48
8001 Strassen (LU)**

(54) **SYSTEMS AND METHODS INCLUDING PROTECTION CIRCUIT FOR CAPACITOR
DISCHARGE FOR POWER CONVERTER FOR ELECTRIC VEHICLE**

(57)    A system including a power converter, wherein the power converter includes a capacitor, a resistor, a switch to discharge the capacitor to the resistor, and a switch driver configured to receive a control signal and a protection signal, and generate a switch control signal for the switch to control an operation of the switch, based on the control signal and the protection signal, wherein the protection signal is generated based on a temperature model of the resistor.

FIG. 4

EP 4 757 155 A1

**Description**

**TECHNICAL FIELD**

Various embodiments of the present disclosure relate generally to systems and methods for controlling a capacitor discharge of a power converter, and, more particularly, to systems and methods including a protection circuit to control a capacitor discharge of an inverter for an electric vehicle.

**BACKGROUND**

Power converters, such as inverters and chargers, for example, may include a high voltage bus. Inverters, such as those used to drive a motor in an electric vehicle, for example, are responsible for converting High Voltage Direct Current (HVDC) into Alternating Current (AC) to drive the motor. For example, inverters and chargers contain capacitors on a HVDC bus. The capacitors on a HV bus have to be discharged in the event of a fault condition or as part of the normal operation (e.g. when powering down the system/vehicle). In an inverter, a bulk capacitor is discharged in the event of a fault condition to reduce the risk of contact with high voltages. Discharge of the bulk capacitor may stress resistors and/or power switches.

The present disclosure is directed to overcoming one or more of these above-referenced challenges.

**SUMMARY OF THE DISCLOSURE**

In some aspects, the techniques described herein relate to a system including: a power converter, wherein the power converter includes: a capacitor; a resistor; a switch to discharge the capacitor to the resistor; and a switch driver configured to receive a control signal and a protection signal, and generate a switch control signal for the switch to control an operation of the switch, based on the control signal and the protection signal, wherein the protection signal is generated based on a temperature model of the resistor.

In some aspects, the techniques described herein relate to a system, wherein the power converter further includes: a protection signal generator configured to generate the protection signal based on the temperature model of the resistor.

In some aspects, the techniques described herein relate to a system, wherein protection signal generator includes one or more of a multiplier or a function generator configured to: receive one or more of a voltage of the resistor, a current of the resistor, or a product of the current of the resistor and the voltage of the resistor, and generate a dissipation power of the resistor based on the one or more of the voltage of the resistor, the current of the resistor, or the product of the current of the resistor and the voltage of the resistor, wherein the one or more of the multiplier or function generator uses a same signal for a first input and a second input, and includes a PWM generator with an average duty cycle that is approximatively a linear function of the first input and the second input and with an output that is used to control a switching device that modulates the second input.

In some aspects, the techniques described herein relate to a system, wherein the protection signal generator further includes a filter configured to: receive the dissipation power, and determine a model temperature of the resistor based on the dissipation power and the temperature model.

In some aspects, the techniques described herein relate to a system, wherein the protection signal generator further includes a comparator configured to: receive the model temperature, and generate the protection signal based on the model temperature and a high temperature threshold.

In some aspects, the techniques described herein relate to a system, wherein the protection signal generator further includes a sum generator configured to receive the model temperature and an ambient temperature of the power converter, and generate an adjusted temperature of the resistor based on the model temperature and the ambient temperature, and wherein the protection signal generator further includes a comparator configured to receive the adjusted temperature, and generate the protection signal based on the adjusted temperature and a high temperature threshold.

In some aspects, the techniques described herein relate to a system, wherein the protection signal generator is further configured to latch the protection signal to disable the discharge of the capacitor when the adjusted temperature meets the high temperature threshold.

In some aspects, the techniques described herein relate to a system, wherein the protection signal generator is further configured to reset the protection signal to enable the discharge of the capacitor when a measured temperature of the resistor meets a low temperature threshold.

In some aspects, the techniques described herein relate to a system, further including: a battery configured to supply DC power to the power converter; and a motor configured to receive AC power from the power converter to drive the motor, wherein the system is provided as a vehicle including the power converter, the battery, and the motor.

In some aspects, the techniques described herein relate to a system including a protection signal generator for a switch driver of a power converter, the protection signal generator configured to generate a protection signal for a discharge operation of a capacitor of the power converter to a resistor of the power converter, based on a temperature model of the resistor of the power converter.

In some aspects, the techniques described herein relate to a system, wherein the protection signal generator includes one or more of a multiplier or a function generator configured to: receive one or more of a voltage of the resistor, a current of the resistor, or a product of the current of the resistor and the voltage of the resistor, and generate a dissipation power of the resistor based on the one or more of the voltage of the resistor, the current of the resistor, or the product of the current of the resistor and the voltage of the resistor.

In some aspects, the techniques described herein relate to a system, wherein the protection signal generator further includes a filter configured to: receive the dissipation power, and determine a model temperature of the resistor based on the dissipation power and the temperature model.

In some aspects, the techniques described herein relate to a system, wherein the protection signal generator further includes a sum generator configured to: receive the model temperature and an ambient temperature of the power converter, and generate an adjusted temperature of the resistor based on the model temperature and the ambient temperature.

In some aspects, the techniques described herein relate to a system, wherein the protection signal generator further includes a comparator configured to: receive the adjusted temperature, and generate the protection signal based on the adjusted temperature and a high temperature threshold.

In some aspects, the techniques described herein relate to a system, wherein the protection signal generator further includes a comparator configured to: receive the model temperature, and generate the protection signal based on the model temperature and a high temperature threshold.

In some aspects, the techniques described herein relate to a system, wherein the protection signal generator is further configured to latch the protection signal to disable the discharge operation of the capacitor when the model temperature meets the high temperature threshold.

In some aspects, the techniques described herein relate to a method including: generating a protection signal for a discharge operation of a capacitor of a power converter to a resistor of the power converter, based on a temperature model of the resistor of the power converter.

In some aspects, the techniques described herein relate to a method, further including: receiving one or more of a voltage of the resistor or a current of the resistor; generating a dissipation power of the resistor based on the one or more of the voltage of the resistor or the current of the resistor; determining a model temperature of the resistor based on the dissipation power and the temperature model; and generating the protection signal based on the model temperature of the resistor.

In some aspects, the techniques described herein relate to a method, further including: receiving one or more of a voltage of the resistor or a current of the resistor; generating a dissipation power of the resistor based on the one or more of the voltage of the resistor or the current of the resistor; determining a model temperature of the resistor based on the dissipation power and the temperature model; receiving an ambient temperature of the power converter; generating an adjusted temperature of the resistor based on the model temperature and the ambient temperature; and generating the protection signal based on the adjusted temperature of the resistor.

In some aspects, the techniques described herein relate to a method, further including: operating a switch of the power converter based on the protection signal for the discharge operation of the capacitor of the power converter.

Additional objects and advantages of the disclosed embodiments will be set forth in part in the description that follows, and in part will be apparent from the description, or may be learned by practice of the disclosed embodiments. The objects and advantages of the disclosed embodiments will be realized and attained by means of the elements and combinations particularly pointed out in the appended claims.

It is to be understood that both the foregoing general description and the following detailed description are exemplary and explanatory only and are not restrictive of the disclosed embodiments, as claimed.

## BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.

FIG. 1 depicts an exemplary system infrastructure for a vehicle including a combined inverter and converter, according to one or more embodiments.

FIG. 2 depicts an exemplary system infrastructure for the combined inverter and converter of FIG. 1, according to one or more embodiments.

FIG. 3 depicts an exemplary system infrastructure for an inverter controller, according to one or more embodiments.

FIG. 4 depicts an electrical schematic of an active discharge circuit, according to one or more embodiments.

FIG. 5 depicts an exemplary protection signal generator, according to one or more embodiments.

FIG. 6 depicts an exemplary square function implementation circuitry, according to one or more embodiments

## DETAILED DESCRIPTION OF EMBODIMENTS

Both the foregoing general description and the following detailed description are exemplary and explanatory only and are not restrictive of the features, as claimed. As used herein, the terms "comprises," "comprising," "has," "having," "includes," "including," or other variations thereof, are intended to cover a nonexclusive inclusion such that a process, method, article, or apparatus that comprises a list of elements does not include only those elements, but may include other elements not expressly listed or inherent to such a process, method, article, or apparatus. In this disclosure, unless stated otherwise, relative terms, such as, for example, "about," "substantially," and "approximately" are used to indicate a possible variation of $\pm 10\%$ in the stated value. In this disclosure, unless stated otherwise, any numeric value may include a possible variation of $\pm 10\%$ in the stated value.

The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section. For example, in the context of the disclosure, the switching devices may be described as switches or devices, but may refer to any device for controlling the flow of power in an electrical circuit. For example, switches may be metal-oxide-semiconductor field-effect transistors (MOSFETs), bipolar junction transistors (BJTs), insulated-gate bipolar transistors (IGBTs), or relays, for example, or any combination thereof, but are not limited thereto.

Various embodiments of the present disclosure relate generally to systems and methods for controlling a capacitor discharge of a power converter, and, more particularly, to systems and methods including a protection circuit to control a capacitor discharge of an inverter for an electric vehicle. The present disclosure refers to an inverter as an example embodiment of a power converter. Power converters may include chargers, inverters, or DC-DC converters, for example. However, one or more embodiments may include any circuit that discharges a capacitor.

Inverters, such as those used to drive a motor in an electric vehicle, for example, are responsible for converting High Voltage Direct Current (HVDC) into Alternating Current (AC) to drive the motor. A three phase inverter may include a bridge with six power device switches (for example, power transistors such as IGBT or MOSFET) that are controlled by Pulse Width Modulation (PWM) signals generated by a controller. An inverter may include three half-H bridge switches to control the phase voltage, upper and lower gate drivers to control the switches, a PWM controller, and glue logic between the PWM controller and the gate drivers. The PWM controller may generate signals to define the intended states of the system. The gate drivers may send the signals from the PWM controller to the half-H bridge switches. The half-H bridge switches may drive the phase voltage. Six phase (or other phase) inverters, chargers, DC-DC converters, and/or multi-level inverters are not excluded from this concept and will follow similar principles.

As a result of system design, a significant amount of energy may be stored on the high voltage bus bulk/DC link capacitor of the inverter, or on capacitors included in other devices such as, for example, on capacitors included in chargers or DC-DC converters. This stored high voltage energy must be dissipated to prevent human exposure to dangerous voltage levels. A function of inverters called "active discharge" allows for the controlled dissipation of the stored energy in the system capacitance. The system capacitance is generally referred to as a bulk capacitor in inverter systems. A high voltage battery providing energy to the inverter is disconnected prior to initiating active discharge of the bus to avoid discharging the battery. The active discharge function has the ability to quickly dissipate high voltage bus energy for safety in events such as vehicle service, vehicle crash, and the like. The rate of discharge is a function of initial bus voltage, capacitance, and the energy dissipation mechanism. Government/OEM regulations also dictate what discharge rates are required. For example, regulations may require that a high voltage bus must be discharged to less than 60V in less than 2.5 seconds.

Inverters frequently have a safety requirement to discharge the bulk capacitor on the inverter, in the event of a crash or other fault situation, in a short period of time, such as between 1 and 3 seconds, for example. Inverters may also be configured to discharge capacitors on a DC bus, which may include the bulk capacitor of the inverter, but may also include additional capacitors connected in parallel to the DC bus. Some systems discharge the bulk capacitor using the motor windings, which requires the motor to not be shorted and for the main microcontroller to be available. Some systems discharge the bulk capacitor using a dedicated resistive discharge, which is frequently a combination of high power resistors, a switch, and a controller. Due to safety requirement, discharging the capacitor in an inverter may also be needed when a main microprocessor of the inverter is not available.

Inverters, such as those used to drive a motor in an electric vehicle, for example, are responsible for converting High Voltage Direct Current (HVDC) into Alternating Current (AC) to drive the motor. In an inverter, a bulk capacitor is discharged in the event of a fault condition to reduce the risk of contact with high voltages. Active discharge of the bulk capacitor may stress resistors. An inverter may use a resistor or a resistor assembly that may be controlled by a modulated pulse (PWM) or linearly, to perform an active discharge of the bulk capacitor of the inverter. These resistors may be designed for a short operation under maximum HV DC voltage and may be prone to overheat in case of unexpected problems in the system or specific system contexts (e.g., HV DC being fed by some other energy source, as for example, a second inverter or by a stuck battery relay). A high power and/or current at maximum HV DC voltage may represent some challenges to perform active discharges (e.g., at 800V the power is nearly 180 times higher than at 60V, which may be the target voltage after the active discharge).

Some systems tend to focus on control of power instead than a temperature control protection. With the absence of a temperature control protection, a high risk of system failure and/or destruction is present. In some systems, even a constant power system will overheat unless designed conservatively. In some systems, temperature sensors tend to be slow if the discharge resistor is operated at maximum voltage, and hence, such systems may not meet safety requirements. Some systems may include challenges with microprocessors to fulfill safety requirements (e.g., ISO26262) or noise sensitivity driving, and therefore, a desire to have a solution that can be implemented in hardware may be beneficial. Some systems implement control systems that are not cost-effective.

Some systems rely on PWM actuation signal and a duty cycle configured in such a way that a desired current flows through a resistor.

One or more embodiments may provide an active discharge circuit that may focus on a discharge resistor temperature, which may not need a PWM signal and a determination of a duty cycle. Accordingly, one or more embodiments may include a system and a method that may be substantially simpler than some systems. One or more embodiments may use a bang-bang controller to control an estimated temperature of a discharge resistor and protect the discharge resistor, as well as the environment next to the discharge resistor (e.g., adjacent devices) against excessive temperatures. One or more embodiments may model a temperature of a discharge resistor more accurately by configuring a filter with more time constants. One or more embodiments may have the advantage that may drive a higher current as long as the discharge resistor is cold (e.g., has a low temperature), which may allow a faster discharge of a bulk capacitor under normal conditions.

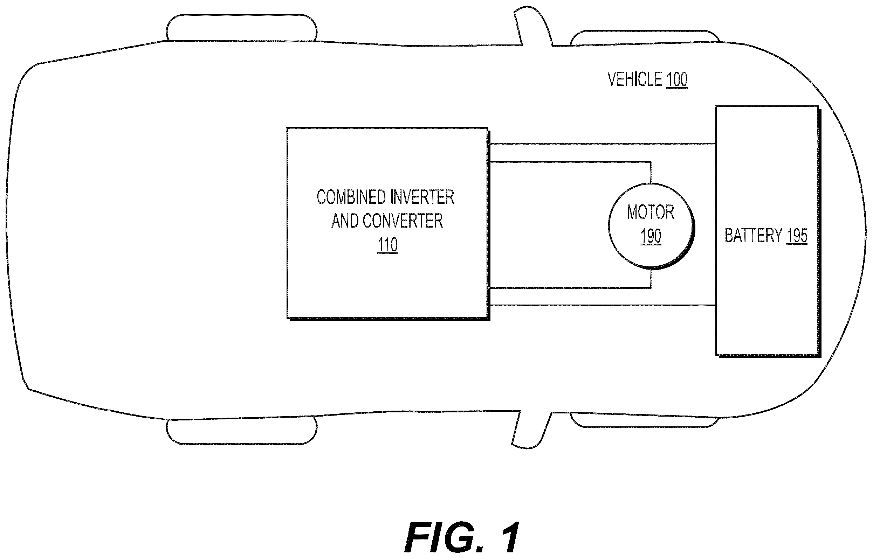

FIG. 1 depicts an exemplary system infrastructure for a vehicle including a combined inverter and converter, according to one or more embodiments. Alternatively, the inverter may be an inverter without a converter. In the context of this disclosure, the inverter without a converter, or the combined inverter and converter, may be referred to as an inverter 110. As shown in FIG. 1, electric vehicle 100 may include an inverter 110, a motor 190, and a battery 195. The inverter 110 may include components to receive electrical power from an external source and output electrical power to charge the battery 195 of electric vehicle 100. The inverter 110 may convert DC power from the battery 195 in electric vehicle 100 to AC power, to drive (e.g. rotate) the motor 190 of the electric vehicle 100, for example, but the embodiments are not limited thereto. The inverter 110 may be bidirectional, and may convert DC power to AC power, or convert AC power to DC power, such as during regenerative braking, for example. The inverter 110 may be a three-phase inverter, a single-phase inverter, or a multi-phase inverter.

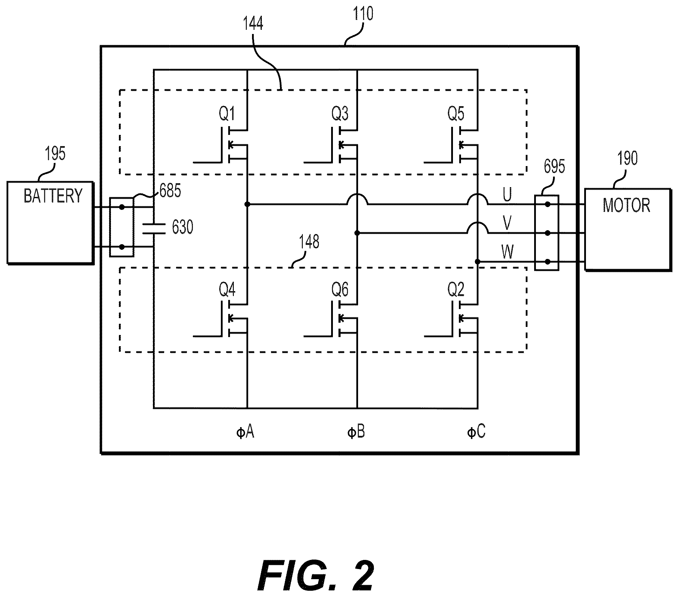

FIG. 2 depicts an electrical power schematic of a three phase inverter module, according to one or more embodiments. The inverter 110 in FIG. 2 may be the inverter 110 in FIG. 1. Inverter 110 may be used to convert DC power from a battery in an electric vehicle to AC power, to drive an electric motor of the electric vehicle, for example, but embodiments are not limited thereto. Additionally, inverter 110 may be bidirectional, and used to convert DC power to AC power, or to convert AC power to DC power. The inverter 110 in FIG. 2 is only exemplary and three-level inverters may include a split bulk capacitor, but embodiments are not limited thereto.

As shown in FIG. 2, inverter 110 may be connected to battery 195 (e.g., DC power supply) and motor 190. Inverter 110 may include upper phase switches 144 and lower phase switches 148. A first phase (ΦA) may include switches Q1 and Q4, a second phase (ΦB) may include switches Q3 and Q6, and a third phase (ΦC) may include switches Q5 and Q2. Upper phase switches 144 may include first phase switch Q1, second phase switch Q3, and third phase switch Q5. Lower phase switches 148 may include first phase switch Q4, second phase switch Q6, and third phase switch Q2. Switches Q1-Q6 may be metal-oxide-semiconductor field-effect transistors (MOSFET), for example, but embodiments are not limited thereto.

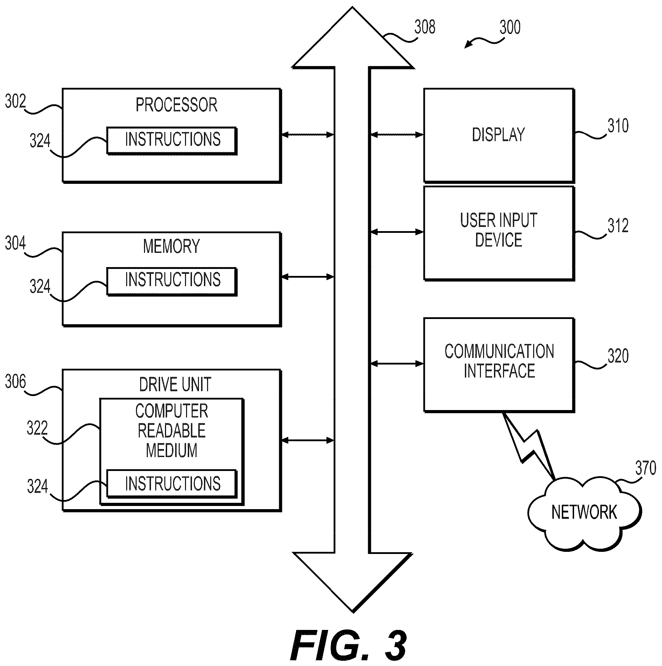

Upper phase switches 144 and lower phase switches 148 may be driven by a pulse width modulated (PWM) signal generated by inverter controller 300 (shown in FIG. 3) to convert DC power delivered via the set of input terminals 685 at bulk capacitor 630 to three phase AC power at outputs U, V, and W (correlating with phases A, B, and C, respectively) via the set of output terminals 695 to motor 190. Additionally, although FIG. 2 illustrates a three-phase inverter, the disclosure is not limited thereto, and may include single phase or multi-phase or multi-level inverters.

As a result of system design, a significant amount of high voltage energy may be stored on the bulk capacitor 630 of the inverter 110 (or in a charger, or a DC-DC converter, or in capacitors included in other electronics connected to the bus in the inverter 110). This stored high voltage energy must be dissipated to prevent human exposure to dangerous voltage levels. A function of inverters called "active discharge" may allow for the controlled dissipation of the stored energy in the bulk capacitor 630. Battery 195 providing energy to the inverter 110 may be disconnected prior to initiating active discharge of the bus to avoid discharging the battery 195. The active discharge function may have the ability to quickly dissipate high voltage bus energy for safety in events such as vehicle service, vehicle crash (or a vehicle power moding), and the like. The rate of discharge may be a function of initial bus voltage, capacitance, and the energy dissipation mechanism. Government/OEM regulations may also dictate what discharge rates are required.

Inverter 110 may have a safety requirement to discharge the bulk capacitor 630 on the inverter 110, in the event of a crash or other fault situation, in a short period of time, such as between 1 and 3 seconds, for example, but embodiments are not limited thereto. Inverter 110 may not discharge the bulk capacitor 630 using windings of motor 190, which requires the motor 190 to not be shorted, and inverter controller 300 to be available. Inverter 110 may discharge the bulk capacitor 630 using a dedicated resistive discharge. For example, inverter 110 may discharge the bulk capacitor 630 using a high power resistor with associated switching and control.

FIG. 3 depicts an exemplary system infrastructure for an inverter controller, according to one or more embodiments. The inverter controller 300 may include one or more controllers. The inverter controller 300 may include a set of instructions that can be executed to cause the inverter controller 300 to perform any one or more of the methods or computer based functions disclosed herein. The inverter controller 300 may operate as a standalone device or may be connected, e.g., using a network, to other computer systems or peripheral devices.

In a networked deployment, the inverter controller 300 may operate in the capacity of a server or as a client in a server-client user network environment, or as a peer computer system in a peer-to-peer (or distributed) network environment. The inverter controller 300 can also be implemented as or incorporated into various devices, such as a personal computer (PC), a tablet PC, a set-top box (STB), a personal digital assistant (PDA), a mobile device, a palmtop computer, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. In a particular implementation, the inverter controller 300 can be implemented using electronic devices that provide voice, video, or data communication. Further, while the inverter controller 300 is illustrated as a single system, the term "system" shall also be taken to include any collection of systems or sub-systems that individually or jointly execute a set, or multiple sets, of instructions to perform one or more computer functions.

As shown in FIG. 3, the inverter controller 300 may include a processor 302, e.g., a central processing unit (CPU), a graphics processing unit (GPU), or both. The processor 302 may be a component in a variety of systems. For example, the processor 302 may be part of a standard inverter. The processor 302 may be one or more general processors, digital signal processors, application specific integrated circuits (ICs), field programmable gate arrays, servers, networks, digital circuits, analog circuits, combinations thereof, or other now known or later developed devices for analyzing and processing data. The processor 302 may implement a software program, such as code generated manually (e.g., programmed).

The inverter controller 300 may include a memory 304 that can communicate via a bus 308. The memory 304 may be a main memory, a static memory, or a dynamic memory. The memory 304 may include, but is not limited to computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one implementation, the memory 304 includes a cache or random-access memory for the processor 302. In alternative implementations, the memory 304 is separate from the processor 302, such as a cache memory of a processor, the system memory, or other memory. The memory 304 may be an external storage device or database for storing data. Examples include a hard drive, compact disc ("CD"), digital video disc ("DVD"), memory card, memory stick, floppy disc, universal serial bus ("USB") memory device, or any other device operative to store data. The memory 304 is operable to store instructions executable by the processor 302. The functions, acts or tasks illustrated in the figures or described herein may be performed by the processor 302 executing the instructions stored in the memory 304. The functions, acts or tasks are independent of the particular type of instructions set, storage media, processor or processing strategy and may be performed by software, hardware, integrated circuits (ICs), firm-ware, micro-code and the like, operating alone or in combination. Likewise, processing strategies may include multiprocessing, multitasking, parallel processing and the like.

As shown, the inverter controller 300 may further include a display 310, such as a liquid crystal display (LCD), an organic light emitting diode (OLED), a flat panel display, a solid-state display, a cathode ray tube (CRT), a projector, a printer or other now known or later developed display device for outputting determined information. The display 310 may act as an interface for the user to see the functioning of the processor 302, or specifically as an interface with the software stored in the memory 304 or in the drive unit 306.

Additionally or alternatively, the inverter controller 300 may include an input device 312 configured to allow a user to interact with any of the components of the inverter controller 300. The input device 312 may be a number pad, a keyboard, or a cursor control device, such as a mouse, or a joystick, touch screen display, remote control, or any other device operative to interact with the inverter controller 300.

The inverter controller 300 may also or alternatively include drive unit 306 implemented as a disk or optical drive. The drive unit 306 may include a computer-readable medium 322 in which one or more sets of instructions 324, e.g. software, can be embedded. Further, the instructions 324 may embody one or more of the methods or logic as described herein. The instructions 324 may reside completely or partially within the memory 304 and/or within the processor 302 during execution by the inverter controller 300. The memory 304 and the processor 302 also may include computer-readable media as discussed above.

In some systems, the computer-readable medium 322 includes instructions 324 or receives and executes instructions 324 responsive to a propagated signal so that a device connected to a network 370 can communicate voice, video, audio, images, or any other data over the network 370. Further, the instructions 324 may be transmitted or received over the network 370 via a communication port or interface 320, and/or using a bus 308. The communication port or interface 320 may be a part of the processor 302 or may be a separate component. The communication port or interface 320 may be created in software or may be a physical connection in hardware. The communication port or interface 320 may be configured to connect with a network 370, external media, the display 310, or any other components in inverter controller 300, or combinations thereof. The connection with the network 370 may be a physical connection, such as a wired Ethernet connection or may be established wirelessly as discussed below. Likewise, the additional connections with other components of the inverter controller 300 may be physical connections or may be established wirelessly. The network 370 may alternatively be directly connected to a bus 308.

While the computer-readable medium 322 is shown to be a single medium, the term "computer-readable medium" may include a single medium or multiple media, such as a centralized or distributed database, and/or associated caches and servers that store one or more sets of instructions. The term "computer-readable medium" may also include any medium that is capable of storing, encoding, or carrying a set of instructions for execution by a processor or that cause a computer system to perform any one or more of the methods or operations disclosed herein. The computer-readable medium 322 may be non-transitory, and may be tangible.

The computer-readable medium 322 can include a solid-state memory such as a memory card or other package that houses one or more non-volatile read-only memories. The computer-readable medium 322 can be a random-access memory or other volatile re-writable memory. Additionally or alternatively, the computer-readable medium 322 can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In an alternative implementation, dedicated hardware implementations, such as application specific integrated circuits (ICs), programmable logic arrays and other hardware devices, can be constructed to implement one or more of the methods described herein. Applications that may include the apparatus and systems of various implementations can broadly include a variety of electronic and computer systems. One or more implementations described herein may implement functions using two or more specific interconnected hardware modules or devices with related control and data signals that can be communicated between and through the modules, or as portions of an application-specific integrated circuit (IC). Accordingly, the present system encompasses software, firmware, and hardware implementations.

The inverter controller 300 may be connected to a network 370. The network 370 may define one or more networks including wired or wireless networks. The wireless network may be a cellular telephone network, an 802.11, 802.16, 802.20, or WiMAX network. Further, such networks may include a public network, such as the Internet, a private network, such as an intranet, or combinations thereof, and may utilize a variety of networking protocols now available or later developed including, but not limited to TCP/IP based networking protocols. The network 370 may include wide area networks (WAN), such as the Internet, local area networks (LAN), campus area networks, metropolitan area networks, a direct connection such as through a Universal Serial Bus (USB) port, or any other networks that may allow for data communication. The network 370 may be configured to couple one computing device to another computing device to enable communication of data between the devices. The network 370 may generally be enabled to employ any form of machine-readable media for communicating information from one device to another. The network 370 may include communication methods by which information may travel between computing devices. The network 370 may be divided into sub-networks. The sub-networks may allow access to all of the other components connected thereto or the sub-networks may restrict access between the components. The network 370 may be regarded as a public or private network connection and may include, for example, a virtual private network or an encryption or other security mechanism employed over the public Internet, or the like.

In accordance with various implementations of the present disclosure, the methods described herein may be implemented by software programs executable by a computer system. Further, in an exemplary, non-limited implementation, implementations can include distributed processing, component or object distributed processing, and parallel processing. Alternatively, virtual computer system processing can be constructed to implement one or more of the methods or functionality as described herein.

Although the present specification describes components and functions that may be implemented in particular implementations with reference to particular standards and protocols, the disclosure is not limited to such standards and protocols. For example, standards for Internet and other packet switched network transmission (e.g., TCP/IP, UDP/IP, HTML, HTTP) represent examples of the state of the art. Such standards are periodically superseded by faster or more efficient equivalents having essentially the same functions. Accordingly, replacement standards and protocols having the same or similar functions as those disclosed herein are considered equivalents thereof.

It will be understood that the operations of methods discussed are performed in one embodiment by an appropriate processor (or processors) of a processing (e.g., computer) system executing instructions (computer-readable code) stored in storage. It will also be understood that the disclosure is not limited to any particular implementation or programming technique and that the disclosure may be implemented using any appropriate techniques for implementing the functionality described herein. The disclosure is not limited to any particular programming language or operating system.

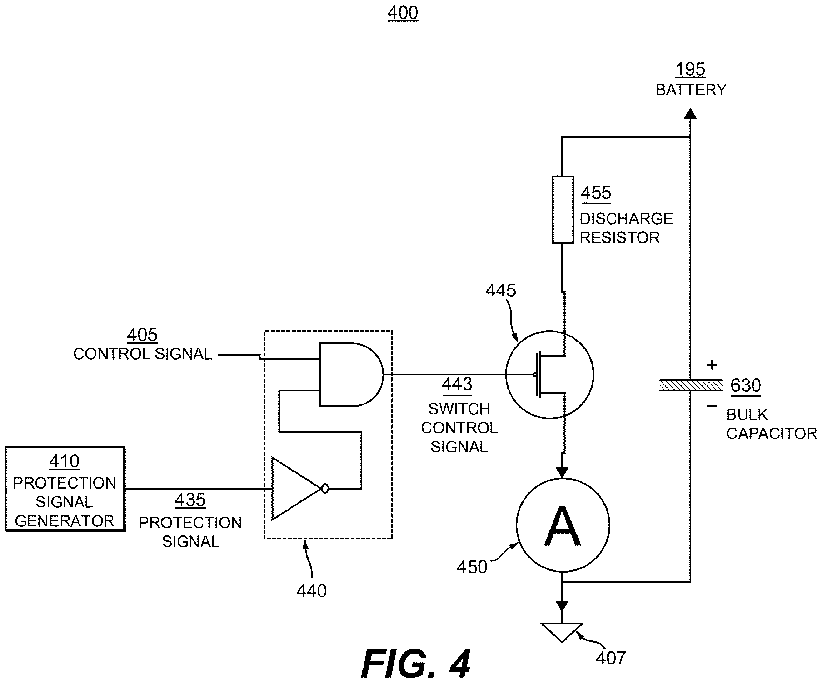

FIG. 4 depicts an electrical schematic of an active discharge circuit, according to one or more embodiments. Active discharge circuit 400 may include a control signal 405, a protection signal generator 410, a switch driver 440, a switch 445, a current measurement device 450, the bulk capacitor 630, and a discharge resistor 455. The active discharge circuit 400 may be connected to a phase connection 407 of the motor 190 and the battery 195. The active discharge circuit 400 may be configured to discharge the bulk capacitor 630 to the discharge resistor 455. Switch 445 may correlate to any of switches Q1-Q6 as depicted in FIG. 2, for example. However, the embodiments are not limited thereto, and switch 445 may be a switch that is used only to discharge the bulk capacitor 630 to the discharge resistor 455, for example.

The protection signal generator 410 may be configured to generate the protection signal 435. The control signal 405 may be generated by a controller, such as inverter controller 300, for example. As depicted in FIG. 4, the protection signal 435 and the control signal 405 may be input to the switch driver 440. The switch driver 440 may include one or more logic gates devices, such as a NOT gate and an AND gate, for example, but embodiments are not limited thereto. For example, the switch driver 440 may include other logic gates and/or other devices. For example, the switch driver 440 may include negative logic gates and/or may be implemented using discrete electronics (e.g., transistors).

The switch driver 440 may be configured to receive the protection signal 435 and the control signal 405, and generate the switch control signal 443 based on the protection signal 435 and control signal 405. The switch driver 440 may be configured to operate the switch 445 using the switch control signal 443 output to the switch 445. The switch driver 440 may be configured to generate an enable state of the switch control signal 443 to the switch 445 to enable a discharge operation of the bulk capacitor 630. The switch driver 440 may be configured to generate a disable state of the switch control signal 443 to the switch 445 to disable a discharge operation of the bulk capacitor 630.

The switch driver 440 may be configured to generate an enable state of the switch control signal 443 to the switch 445 to enable and maintain a discharge operation of the bulk capacitor 630 while the protection signal 435 from the protection signal generator 410 maintains an enable state. The switch driver 440 may be configured to generate the disable state of the switch control signal 443 to the switch 445 to disable (or stop) a discharge operation of the bulk capacitor 630 in response to the switch driver 440 receiving a disable state of the protection signal 435 while the switch driver 440 receives an enable state of the control signal 405. For example, the switch driver 440 may be configured to operate the switch 445 to enable a discharge operation of the bulk capacitor 630 in response to receiving an enable state of the control signal 405, and to maintain the discharge operation of the bulk capacitor 630 until the enable state of control signal 405 is discontinued (or no longer received by the switch driver 440) or until the switch driver 440 receives a disable state (or no longer receives an enable state) of the protection signal 435, in which case the switch driver 440 may be configured to disable (or stop) the discharge operation of the bulk capacitor 630.

The current measurement device 450 may be configured to measure a current flowing through the active discharge circuit 400, but embodiments are not limited thereto. For example, a current may be measured (or estimated) by using the resistance and measuring a voltage. While the discharge operation of the bulk capacitor 630 is enabled (or occurring), a measured voltage or current 458 at the discharge resistor 455 may be measured by a meter device (not shown). Prior to initiating the discharge operation of the bulk capacitor 630, the battery 195 may be disconnected from the active discharge circuit 400 to avoid discharging the bulk capacitor 630 while the battery 195 is connected.

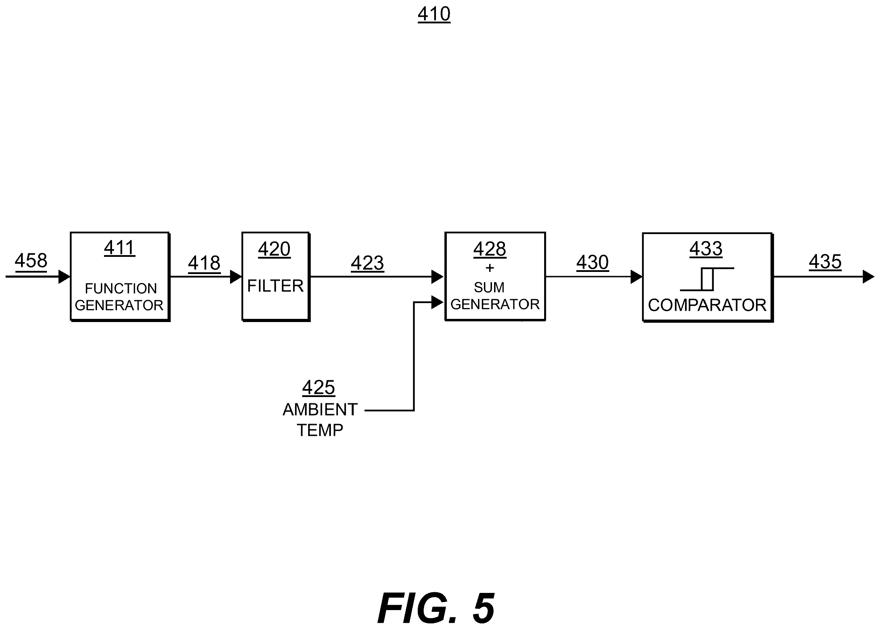

FIG. 5 depicts an exemplary protection signal generator, according to one or more embodiments. Protection signal generator 410 may include a function generator 411, a filter 420, a sum generator 428, and a comparator 433. The protection signal generator 410 may be configured to receive the measured voltage or current 458 measured at the discharge resistor 455, and may be configured to generate the protection signal 435 based on the received measured voltage or current 458.

The function generator 411 may be configured to receive the measured voltage or current 458, which may be measured at the discharge resistor 455 while the bulk capacitor 630 is being discharged. The function generator 411 may be configured to generate the dissipation power 418 of the discharge resistor 455 based on the received measured voltage or current 458. For example, the function generator 411 may be configured to generate the dissipation power 418 based on a calculation of the dissipation power 418 of the discharge resistor 455. The calculation may include applying one or more of the following equations:

$$P = R * I^2$$
Equation (1);

$$P = \frac{V^2}{R}$$
Equation (2).

In Equation (1), P is the power dissipated at the discharge resistor 455, R is the value (e.g., ohmic value) of the discharge resistor 455, and I is a current measured at the discharge resistor 455. In Equation (2), P is the power dissipated at the discharge resistor 455, V is a voltage measured at the discharge resistor 455, and R is the value of the discharge resistor 455. The function generator 411 may be configured to output the dissipation power 418 to the filter 420.

The filter 420 may be configured to receive the dissipation power 418 from the function generator 411 and generate a model temperature 423 of the discharge resistor 455 based on the dissipation power 418 and a temperature model. For example, the filter 420 may be configured to determine the model temperature 423 of the discharge resistor 455 based on the dissipation power 418 and a temperature model of the discharge resistor 455. The temperature model may include information about different temperatures corresponding to respective power dissipation values (e.g., a set of temperatures correlating to respective values of power dissipation) and may compute the temperature or the temperature increase caused by the power dissipation. The filter may be a model of the thermal resistances and time-constants of the elements of the discharge resistor 455 and/or an environment of discharge resistor 455. The temperature model may be a hardware circuit that provides different temperatures corresponding to respective power dissipation values (e.g., a set of temperatures correlating to respective values of power dissipation). For example, the filter 420 may include an integrator, an RC filter, a higher order filter, an active filter (e.g., including operational amplifiers), and/or a passive filter (e.g., a RC filter), but embodiments are not limited thereto. The filter 420 may be configured to output the model temperature 423 to the sum generator 428.

The sum generator 428 may be may configured to receive the model temperature 423 from the filter 420. The sum generator 428 may be may configured to also receive an ambient temperature 425 of the inverter 110. The ambient temperature 425 may be the ambient temperature inside the inverter 110 (e.g., initial temperature), but embodiments are not limited thereto. For example, the ambient temperature 425 may be a constant temperature, an estimated (e.g., or assumed) temperature, and/or a temperature measured at the environment (e.g., surroundings, vicinity, etc.) of the discharge resistor 455 measured by a temperature measurement device (e.g., thermometer, etc., not depicted in FIG. 5), but embodiments are not limited thereto. The sum generator 428 may be configured to generate an adjusted temperature 430 of the discharge resistor 455 based on the model temperature 423. The sum generator 428 may be configured to generate an adjusted temperature 430 of the discharge resistor 455 based on the model temperature 423 and the ambient temperature 425. For example, the adjusted temperature 430 may be the sum of the model temperature 423 and the ambient temperature 425, but embodiments are not limited thereto. The sum generator 428 may be configured to output the adjusted temperature 430 to the comparator 433, but embodiments are not limited thereto. For example, the sum generator 428 may be integrated into the model temperature 423.

The comparator 433 may be configured to receive the adjusted temperature 430 from the sum generator 428 and generate the protection signal 435 based on the adjusted temperature 430 and a high temperature threshold. For example, the comparator 433 may be configured to generate the protection signal 435 based on comparing the adjusted temperature 430 to a high temperature threshold to determine whether the adjusted temperature 430 meets (or exceeds) the temperature threshold, but embodiments are not limited thereto. For example, the comparator 433 may be pre-programmed to periodically and/or continuously (e.g., at a high frequency) compare the adjusted temperature 430 to a high temperature threshold (that may be pre-programmed onto the comparator 433) to determine whether the adjusted temperature 430 meets (or exceeds) the high temperature threshold, to generate and output the protection signal 435, but embodiments are not limited thereto and other techniques (or designs) may be used. The comparator 433 may be configured to output the protection signal 435 to the switch driver 440 in response to the adjusted temperature 430 meeting (or exceeding) the high temperature threshold.

The filter 420 may be configured to output the model temperature 423 directly to the comparator 433 (e.g., without passing through the sum generator 428), and the comparator 433 may be configured to receive the model temperature 423 directly from the filter 420. The comparator 433 may be configured to receive the model temperature 423 from the filter 420 and generate the protection signal 435 based on the model temperature 423 and a high temperature threshold, but embodiments are not limited thereto. For example, blocks may be used to model temperatures and also signals with proportional values (or magnitudes) in relevant ranges may be used to model temperatures.

The protection signal generator 410 may be configured to output a disable state (or stop outputting an enable state) of the protection signal 435 to the switch driver 440 to operate the switch 445 to disable (or stop) a discharge operation of the bulk capacitor 630 in response to the comparator 433 determining that the adjusted temperature 430 or the model temperature 423 meets (or exceeds) a high temperature threshold. The protection signal generator 410 may be configured to latch a disable state of the protection signal 435 output to the switch driver 440 to maintain the disable of the discharge operation of the bulk capacitor 630 when the adjusted temperature meets (or exceeds) a high temperature threshold, but embodiments are not limited thereto.

The protection signal generator 410 may be configured to reset (or output the enable state of) the protection signal 435 to the switch driver 440 to operate the switch 445 to enable (e.g., start or re-start) a discharge operation of the bulk capacitor 630 in response to the comparator 433 determining that the adjusted temperature 430 or the model temperature 423 meets (or is less than) a low temperature threshold, but embodiments are not limited thereto.

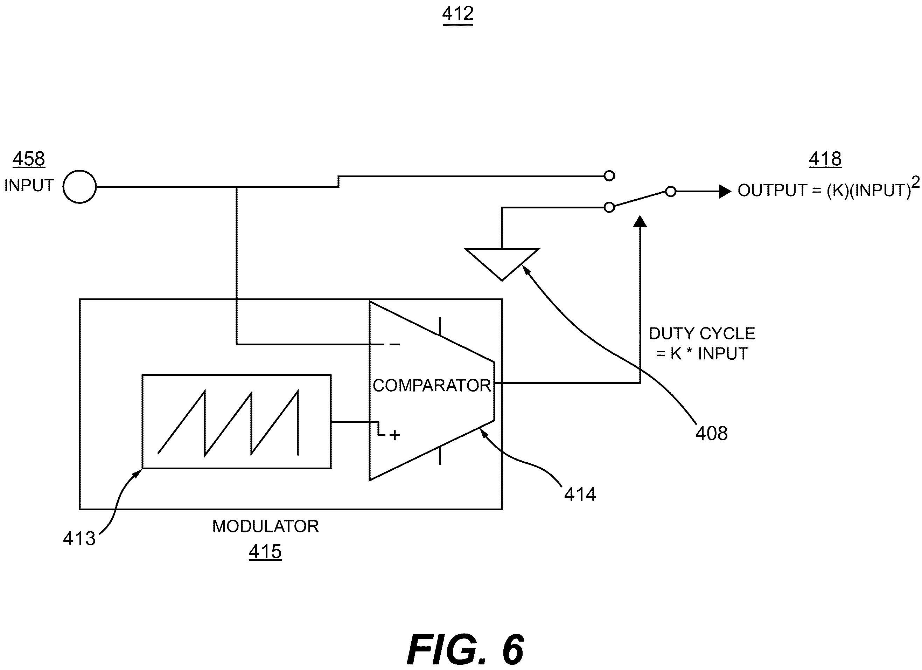

FIG. 6 depicts an exemplary square function implementation circuitry, according to one or more embodiments. The square function implementation may square (multiply) a single input or multiply two inputs, and may be referred to as a multiplier. Multiplier 412 may depict an implementation of the function generator 411, and may be a multiplier or square function implementation. The multiplier 412 may be a square function implementation, as depicted in FIG. 6, with a single input connected to both dissipation power 418 and an input of comparator 414. The multiplier 412 may be a multiplier function implementation with a first input connected to dissipation power 418 and a second input connected to an input of comparator 414. The multiplier 412 may be a pulse-based multiplier, but embodiments are not limited thereto. The multiplier 412 may be connected to the ground node 408. The multiplier 412 may be configured to output the dissipation power 418. The multiplier 412 may include a modulator 415 having a PWM signal generator 413, and a comparator 414, but embodiments are not limited thereto. For example, the PWM signal generator 413 may be a triangle/ramp generator and the modulator 415 may be PWM generator. For example, the multiplier 412 may include one or more integrated circuits (ICs) and/or other devices. The multiplier 412 may be a pulse-based (PWM) multiplier, but embodiments are not limited thereto. The modulator 415 may be configured to generate an average duty cycle with a linear relationship (e.g., a more or less linear relationship) to a duty cycle of the measured voltage or current 458 being input to the multiplier 412. The dissipation power 418 of the multiplier 412 may be defined by the following equation:

$$Output\ (418) = K * Input^2 \qquad \text{Equation (3).}$$

In Equation (3), K may be a constant and the Input may be the measured voltage or current 458. The modulator 415 may include a ramp-based PWM generator, but embodiments are not limited thereto. For example, the modulator 415 may be based on a triangle signal or an RC charge/discharge waveform, but embodiments are not limited thereto. For example, the modulator 415 may be a delta-sigma modulator. The modulator 415 may have a bandwidth with a frequency in the kHz range, but embodiments are not limited thereto. For example, in an embodiment where the multiplier 412 includes a first input and a second input, the dissipation power 418 (output) in Equation (3) may be equal to the product of K, the first input, and the second input. The modulator 415 may be configured to output a duty cycle through the comparator 414. The duty cycle may defined by the following equation:

$$Duty\ Cycle \approx K * Input \qquad \text{Equation (4).}$$

In Equation (4), K may be a constant and the Input may be the measured voltage or current 458. For example, in an embodiment where the multiplier 412 includes a first input and a second input, the Duty Cycle of Equation (4) may be equal to the product of K and the second input.

In one or more embodiments, the temperature model may be a low-pass filter, with no filtering on the output. One or more embodiments may provide an active discharge circuit that may focus on a discharge resistor temperature, which may not need a PWM signal and a determination of a duty cycle. One or more embodiments may include a system and a method that may be substantially simpler than some systems.

One or more embodiments may use (or be configured to behave as) a bang-bang controller to control an estimated temperature of a discharge resistor and protect the discharge resistor, as well as the environment next to the discharge resistor (e.g., adjacent devices) against excessive temperatures. One or more embodiments may also have potential to model a temperature of a discharge resistor more accurately by configuring a filter by more time constants. One or more embodiments may also have the advantage that may naturally drive a higher current as long as the discharge resistor is cold (e.g., have a low temperature), which may allow a faster discharge of a bulk capacitor under normal conditions.

One or more embodiments may include a resistor or a resistor assembly configured to be switched or potentially controlled by pulses or linearly. One or more controller may be configured to perform an active discharge of a bulk capacitor even when a microprocessor is not available. One or more embodiments may be configured to actively discharge a bulk capacitor by using hardware, without a microprocessor.

One or more embodiments, may be preferably configured to be implemented by using hardware as this may be favorable to comply with safety standards and/or requirements (e.g., ISO 26262), but embodiments are not limited thereto. For example, microprocessors and/or digital logics devices may be used to perform some of the inventive concepts. One or more embodiments may include inventive concepts directed to protect a discharge resistor (and/or its surroundings, vicinity, etc.) in an inverter in case temperatures in the discharge resistor caused by the discharge of a bulk capacitor are estimated (or measured) to be too high.

One or more embodiments may include an Application-Specific Integrated Circuit (ASIC) (or a programmable chip) solution to perform some of the present inventive concepts disclosed herein. For example, besides an analog processing chain, a possible alternate solution may be applied, including applying a square function X^2 to calculate the power and the filter to estimate a temperature. Another solution may include an ASIC configured to read an HVDC voltage so that the implementation is mainly digital logic for the square and filtering. As the HVDC voltage is constant, the switch may first be used to calculate the voltage on the resistor (which only sees the voltage when actuated) and then over U^2/R the power. In one or more embodiments, a software implementation may be used. One or more embodiments may be configured to perform calculations using one or more of the equation 1, equation 2, and/or P=V*I. In some embodiments, it may not be needed to measure the HVDC in a specific location of the system (e.g., on the resistor or on the battery/supply).

One or more embodiments may not include a resistor to discharge capacitors in an inverter (or a charger, or DC-DC converter). For example, one or more embodiments may be configured to discharge a capacitor using one or more switches. One or more embodiments may be configured to include one or more controllers to generate a switch control signal to control operation of a switch to discharge a capacitor using the switch. One or more embodiments may include one or more controllers configured to perform operations based on instructions stored in one or more memory modules. In one or more embodiments, one or more controllers may include a switch driver configured to receive a control signal and a protection signal, and generate a switch control signal for a switch to control an operation of the switch, based on the control signal and the protection signal. In one or more embodiments, the protection signal may be generated based on the temperature model of the switch.

One or more embodiments may be configured to latch a protection signal, but embodiments are not limited thereto. For example, one or more embodiments may be configured not to latch a protection signal (e.g., non-latch protection signal). In one or more embodiments, a controller may be configured to switch off an active discharge resistor in response to a determination by a comparator that a temperature of the system (e.g., inverter) is too high (e.g., meeting or exceeding a certain threshold). One or more embodiments may include a controller configured to switch back on an active discharge resistor after a temperature of the system (e.g. inverter) dropping less than a certain threshold. One or more embodiments may be configured to repeat (or reset) the operation described above until a bulk capacitor is discharged (or sufficiently discharged, e.g., approximately 60V or less). One or more embodiments may include several threshold devices and/or use differently filtered signals with different thresholds on different elements and/or devices.

Other embodiments of the disclosure will be apparent to those skilled in the art from consideration of the specification and practice of the invention disclosed herein. It is intended that the specification and examples be considered as exemplary only, with a true scope of the invention being indicated by the following claims.

**Claims**

1. A system comprising:

    a power converter, wherein the power converter includes:

        a capacitor;
        a resistor;
        a switch to discharge the capacitor to the resistor; and
        a switch driver configured to receive a control signal and a protection signal, and generate a switch control signal for the switch to control an operation of the switch, based on the control signal and the protection signal,

    wherein the protection signal is generated based on a temperature model of the resistor.

2. The system of claim 1, wherein the power converter further includes:
a protection signal generator configured to generate the protection signal based on the temperature model of the resistor.

3. The system of any one of claims 1 to 2, wherein protection signal generator includes one or more of a multiplier or a function generator configured to:

receive one or more of a voltage of the resistor, a current of the resistor, or a product of the current of the resistor and the voltage of the resistor, and

generate a dissipation power of the resistor based on the one or more of the voltage of the resistor, the current of the resistor, or the product of the current of the resistor and the voltage of the resistor,

wherein the one or more of the multiplier or function generator uses a same signal for a first input and a second input, and includes a PWM generator with an average duty cycle that is approximatively a linear function of the first input and the second input and with an output that is used to control a switching device that modulates the second input.

4. The system of claim 3, wherein the protection signal generator further includes a filter configured to:

receive the dissipation power, and

determine a model temperature of the resistor based on the dissipation power and the temperature model;

and, preferably, wherein the protection signal generator further includes a comparator configured to:

receive the model temperature, and

generate the protection signal based on the model temperature and a high temperature threshold.

5. The system of claim 4, wherein the protection signal generator further includes a sum generator configured to receive the model temperature and an ambient temperature of the power converter, and generate an adjusted temperature of the resistor based on the model temperature and the ambient temperature, and

wherein the protection signal generator further includes a comparator configured to receive the adjusted temperature, and generate the protection signal based on the adjusted temperature and a high temperature threshold;

and, preferably, wherein the protection signal generator is further configured to latch the protection signal to disable the discharge of the capacitor when the adjusted temperature meets the high temperature threshold;

and, most preferably, wherein the protection signal generator is further configured to reset the protection signal to enable the discharge of the capacitor when a measured temperature of the resistor meets a low temperature threshold.

6. The system of any one of claims 1 to 5, further comprising:

a battery configured to supply DC power to the power converter; and

a motor configured to receive AC power from the power converter to drive the motor,

wherein the system is provided as a vehicle including the power converter, the battery, and the motor.

7. A system including a protection signal generator for a switch driver of a power converter, the protection signal generator configured to generate a protection signal for a discharge operation of a capacitor of the power converter to a resistor of the power converter, based on a temperature model of the resistor of the power converter.

8. The system of claim 7, wherein the protection signal generator includes one or more of a multiplier or a function generator configured to:

receive one or more of a voltage of the resistor, a current of the resistor, or a product of the current of the resistor and the voltage of the resistor, and

generate a dissipation power of the resistor based on the one or more of the voltage of the resistor, the current of the resistor, or the product of the current of the resistor and the voltage of the resistor.

9. The system of claim 8, wherein the protection signal generator further includes a filter configured to:

receive the dissipation power, and

determine a model temperature of the resistor based on the dissipation power and the temperature model.

10. The system of claim 9, wherein the protection signal generator further includes a sum generator configured to:

receive the model temperature and an ambient temperature of the power converter, and
generate an adjusted temperature of the resistor based on the model temperature and the ambient temperature;

and, preferably, wherein the protection signal generator further includes a comparator configured to:

receive the adjusted temperature, and
generate the protection signal based on the adjusted temperature and a high temperature threshold.

11. The system of any one of claims 7 to 10, wherein the protection signal generator further includes a comparator configured to:

receive the model temperature, and
generate the protection signal based on the model temperature and a high temperature threshold;
and, preferably, wherein the protection signal generator is further configured to latch the protection signal to disable the discharge operation of the capacitor when the model temperature meets the high temperature threshold.

12. A method comprising:
generating a protection signal for a discharge operation of a capacitor of a power converter to a resistor of the power converter, based on a temperature model of the resistor of the power converter.

13. The method of claim 12, further comprising:

receiving one or more of a voltage of the resistor or a current of the resistor;
generating a dissipation power of the resistor based on the one or more of the voltage of the resistor or the current of the resistor;
determining a model temperature of the resistor based on the dissipation power and the temperature model; and
generating the protection signal based on the model temperature of the resistor.

14. The method of any one of claims 12 to 13, further comprising:

receiving one or more of a voltage of the resistor or a current of the resistor;
generating a dissipation power of the resistor based on the one or more of the voltage of the resistor or the current of the resistor;
determining a model temperature of the resistor based on the dissipation power and the temperature model;
receiving an ambient temperature of the power converter;
generating an adjusted temperature of the resistor based on the model temperature and the ambient temperature; and
generating the protection signal based on the adjusted temperature of the resistor.

15. The method of any one of claims 12 to 14, further comprising:
operating a switch of the power converter based on the protection signal for the discharge operation of the capacitor of the power converter.

VEHICLE 100

BATTERY 195

MOTOR 190

COMBINED INVERTER AND CONVERTER 110

**FIG. 1**

# FIG. 2

DISPLAY 310

USER INPUT DEVICE 312

COMMUNICATION INTERFACE 320

NETWORK 370

300

308

PROCESSOR 302
INSTRUCTIONS 324

MEMORY 304
INSTRUCTIONS 324

DRIVE UNIT 306
COMPUTER READABLE MEDIUM 322
INSTRUCTIONS 324

*FIG. 3*

**400**

195
BATTERY

455
DISCHARGE
RESISTOR

405
CONTROL SIGNAL

445

443
SWITCH
CONTROL
SIGNAL

+
630
BULK
CAPACITOR
−

410
PROTECTION
SIGNAL
GENERATOR

435
PROTECTION
SIGNAL

A

440

450

407

**FIG. 4**

410

458 → 411 FUNCTION GENERATOR → 418 → 420 FILTER → 423 → 428 + SUM GENERATOR → 430 → 433 COMPARATOR → 435

425 AMBIENT TEMP

**FIG. 5**

**FIG. 6**

Europäisches
Patentamt

European
Patent Office

Office européen
des brevets

## EUROPEAN SEARCH REPORT

**Application Number**

EP 25 21 4434

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/199231 A1 (STARK MARCEL [DE]) 27 June 2019 (2019-06-27) * paragraphs [0005], [0010], [0026], [0027], [0030] - [0040]; figures 1-6 * ----- | 1-15 | INV. H02M1/32 H02M7/5387 |
| A | CN 107 846 155 B (FORD GLOBAL TECH LLC) 30 March 2021 (2021-03-30) * abstract * * paragraphs [0005], [0027]; figures 1, 2 * ----- | 1-15 | |

**TECHNICAL FIELDS SEARCHED (IPC)**

H02M

The present search report has been drawn up for all claims

| Place of search | Date of completion of the search | Examiner |
|---|---|---|
| The Hague | 25 March 2026 | Van der Meer, Paul |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 21 4434

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2026

| Patent document cited in search report | Publication date | Patent family member(s) | | Publication date |
|---|---|---|---|---|
| US 2019199231 A1 | 27-06-2019 | CN | 109155582 A | 04-01-2019 |
| | | DE | 102017004227 A1 | 16-11-2017 |
| | | DK | 3455931 T3 | 02-06-2020 |
| | | EP | 3455931 A1 | 20-03-2019 |
| | | US | 2019199231 A1 | 27-06-2019 |
| | | US | 2021075334 A1 | 11-03-2021 |
| | | WO | 2017194196 A1 | 16-11-2017 |
| CN 107846155 B | 30-03-2021 | CN | 107846155 A | 27-03-2018 |
| | | DE | 102017121579 A1 | 22-03-2018 |
| | | US | 2018079315 A1 | 22-03-2018 |

EPO FORM P0459

For more details about this annex : see Official Journal of the European Patent Office, No. 12/82